# FASCICULE DE BREVET EUROPEEN

(11) **EP 3 089 897 B1**
(45) Date de publication et mention de la délivrance du brevet: **07.02.2018**
(21) Numéro de dépôt: 14827739.5
(22) Date de dépôt: 16.12.2014
(51) Int. Cl.: B60T 13/02, B60T 13/58, F16D 51/22, F16D 51/24, F16D 65/09, F16D 65/46, B60T 13/74

(54) **DISPOSITIF DE FREIN A TAMBOUR ADAPTABLE POUR INCLURE UN FREIN DE STATIONNEMENT TRADITIONNEL OU FONCTIONNANT EN MODE DUO SERVO**
TROMMELBREMSANORDNUNG GEEIGNET FÜR TRADITIONELLE FESTSTELLBREMSE ODER FÜR BETRIEB IN DUAL SERVO MODUS
DRUM BRAKE DEVICE SUITABLE FOR INCLUDING A PARKING BRAKE THAT IS CONVENTIONAL OR THAT OPERATES IN DUO SERVO MODE

(30) Priorité: 30.12.2013 FR 1363701
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy le Grand (FR); DUPAS, Christophe, 91120 Palaiseau (FR); PASQUET, Thierry, 94700 Vincennes (FR); MOLINARO, Alberto, 93160 Noisy le Grand (FR)
(74) Mandataire: Pontet Allano & Associes
(86) Numéro de dépôt international: PCT/EP2014/078023
(87) Numéro de publication internationale: WO 2015/101484

(56) Documents cités:
- WO-A2-2007/089300
- US-A- 4 553 647
- US-A- 5 269 396
- US-A1- 2013 087 422

## Description

L'invention se rapporte à un dispositif de frein à tambour de véhicule routier, en particulier pour une automobile. Ce frein à tambour fournit une fonction de frein de service ainsi que de frein de stationnement ou de secours.

En mode frein de service, un premier actionneur écarte deux extrémités mobiles des segments montés sur un plateau mobile en rotation par rapport au tambour, tandis que leurs extrémités opposées viennent toutes deux en butée sur un élément d'ancrage, réalisant un fonctionnement de type "simplex".

Selon l'invention, le mécanisme de ce frein à tambour est monté sur un plateau prévu pour pouvoir recevoir, au choix :
- une plaque de butée servant d'élément d'ancrage pour le mode simplex, en mode frein de service par activation du premier actionneur et en mode frein de stationnement par traction d'un levier actionné par un câble ; ou
- un deuxième actionneur écarte l'une de l'autre les extrémités de butée des segments tandis que leurs extrémités mobiles sont en appui entre elles par l'intermédiaire d'un élément intercalaire libre par rapport au plateau, réalisant un fonctionnement de type "duo servo".

L'invention porte aussi sur un véhicule intégrant un tel frein à tambour, et sur un procédé d'assemblage d'un tel frein à tambour incluant une étape de choix entre le montage d'une plaque de butée simple ou d'un deuxième actionneur.

### Etat de la technique

Dans un véhicule automobile, la fonction de frein de service consiste à ralentir un véhicule et obtenir son arrêt. Dans la plupart des automobiles actuelles, le frein de service est assuré par des freins à tambour ou des freins à disque, ou une combinaison de freins à disque au niveau du train avant et des freins à tambour au niveau du train arrière.

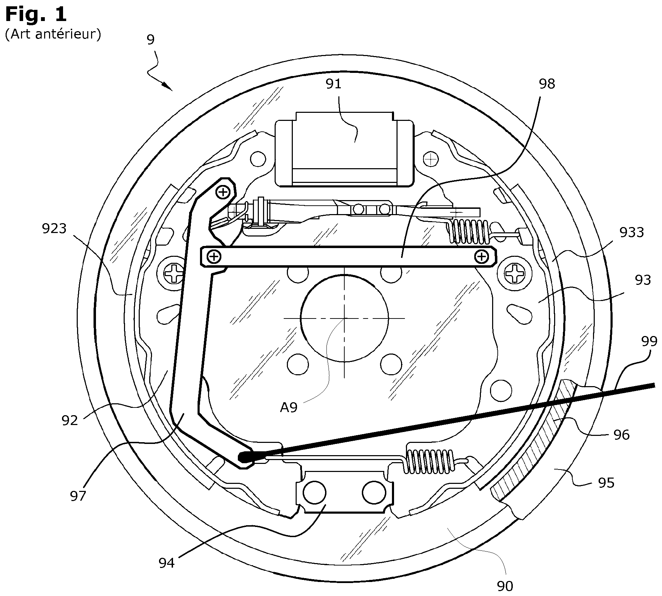

La FIGURE 1 illustre un exemple typique de frein à tambour 9 qui comprend un tambour 95 coaxial avec la roue, monté solidaire de la roue, et dont une jupe porte une piste intérieure de frottement 96. Cette jupe coiffe un mécanisme monté sur un plateau 90 coaxial avec l'axe A9 du moyeu de la roue, et qui est solidaire du demi-train portant le moyeu.

Ce mécanisme comprend deux segments 92, 93 en arcs de cercle montés face à face autour de l'axe de rotation A9 du tambour. Sur leur surface extérieure, des garnitures de frottement 923, 933 viennent appuyer sur la piste du tambour lorsqu'ils sont écartés vers l'extérieur.

Dans les modes appelés "simplex" et "duplex", chaque segment est écarté à une extrémité par un actionneur 91, et son autre extrémité s'appuie tangentiellement à la rotation sur une plaque de butée 94 solidaire du plateau 90, en général par rivetage. Lorsque les segments sont mis en pression contre la piste du tambour, tout mouvement ou effort en rotation de la roue imprime un couple de rotation aux segments, qu'ils transmettent au plateau par cette plaque de butée. En configuration "simplex", les deux segments sont actionnés en leurs deux extrémités d'un même côté, typiquement par un même actionneur hydraulique 91 à double piston et fixé au plateau. C'est le mode le plus classique, qui est simple et d'un fonctionnement fiable et régulier.

La fonction de frein de stationnement consiste à maintenir un véhicule immobilisé de façon continue pendant de longues durées. Depuis longtemps, comme illustré en FIGURE 1, il est connu d'assurer cette fonction au sein du même frein à tambour que pour le frein de service, à l'aide d'un levier 97 tiré par un câble 99 lui-même maintenu par un mécanisme à cliquet. Ce levier pivote sur l'extrémité mobile d'un segment 92, et l'écarte de l'autre segment par une biellette de réaction 98.

La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement.

Bien que satisfaisant et économique comme frein de service, ce type de frein à tambour peut présenter un couple de freinage insuffisant en tant que frein de stationnement, et aussi en frein de secours.

On connaît aussi un autre mode de fonctionnement pour un frein à tambour, dit "duo servo", dans lequel l'actionneur écarte une extrémité d'un premier segment. Celui-ci s'appuie sur le tambour pendant que son autre extrémité est flottante et prend appui par une biellette flottante sur le deuxième segment par son extrémité en vis-à-vis, flottante elle aussi. L'autre extrémité du deuxième segment est ainsi la seule à prendre appui sur une plaque de butée. Ce mode est nettement plus efficace mais présente d'autres inconvénients, par exemple il est plus délicat à ajuster et s'use de façon irrégulière. Il est peu utilisé comme frein de service.

Un frein à tambour de type duo servo est parfois utilisé comme frein de stationnement exclusivement, par exemple en utilisant comme tambour l'intérieur de la cloche centrale d'un disque qui sert de frein de service, combinaison appelée "Drum in hat" et décrite dans le document EP 0 416 760.

Depuis quelques temps déjà, il a aussi été proposé de réaliser un frein à tambour qui fonctionnerait comme frein de service en mode simplex et comme frein de stationnement en mode duo-servo. Parmi différentes combinaisons, le document FR 2 697 599 propose d'ajouter un actionneur mécanique à proximité de la plaque de butée. Cet actionneur s'appuie d'un côté sur une extrémité d'un premier segment et de l'autre sur l'extrémité d'un levier supplémentaire pour les écarter l'une de l'autre. Ce levier coulisse librement le long de l'autre segment, et son extrémité opposée appuie sur une biellette elle-même en appui sur l'extrémité mobile du premier segment.

Or l'intégration d'un modèle de frein différent représente une contrainte et des coûts non négligeables, et n'est pas forcément souhaitée pour tous les modèles d'un constructeur ou fabriqués sur une chaîne de production.

Le document US 5 269 396 décrit par exemple une fixation de frein à tambour avec un plateau à deux pièces.

Un but de la présente invention est de proposer un dispositif de frein à tambour offrant une flexibilité de montage des différents éléments existants afin de réaliser les fonctions de frein de service, de frein de stationnement et de frein de secours.

Elle cherche aussi à proposer un tel dispositif qui soit compatible avec les évolutions techniques des modes de commande des organes automobiles, par exemple par commande électrique.

Elle cherche en outre à permettre une variété et une facilité d'adaptation de ce dispositif dans un véhicule et une souplesse d'intégration dans un processus de montage d'un tel véhicule.

Un autre but de la présente invention est de proposer une étanchéité plus efficiente des différents dispositifs cités au-dessus.

Encore un autre but de la présente invention est de proposer un dispositif économique, et offrant un nombre de pièces réduit, une facilité et une économie de fabrication et/ou d'assemblage et/ou de maintenance, tout en conservant tout ou partie des avantages du mode simplex, duplex et duo servo.

### Exposé de l'invention

Selon un premier aspect de l'invention, le dispositif de frein à tambour pour véhicule automobile, du type provoquant un couple de freinage entre un tambour et un plateau support en mouvement de rotation l'un par rapport à l'autre, par absorption d'énergie sous l'effet d'un frottement entre, d'une part, une piste de frottement formant un cylindre de révolution et portée par une surface intérieure dudit tambour, et d'autre part des garnitures de frottement portées par un premier et un deuxième segments disposés à l'intérieur dudit cylindre et transmettant au moins en partie le couple de freinage entre segment et plateau support par au moins un élément dit d'ancrage formant une butée pour lesdits segments par rapport au plateau support, ledit frottement étant susceptible d'être obtenu par écartement d'au moins l'un desdits segments vers l'extérieur sous l'effet d'au moins un premier actionneur fixé, assurant ainsi une fonction de freinage dans un premier mode de fonctionnement.

Selon l'invention, ce dispositif comprend un élément dit intercalaire, qui est mobile par rapport au plateau, et qui est agencé pour maintenir écartées l'une de l'autre les deux extrémités desdits segments qui sont en vis à vis l'une de l'autre, dites extrémités mobiles.

Selon un premier aspect de l'invention, ce dispositif comprend en outre des moyens de positionnement et de fixation prévus pour recevoir indifféremment, par fixation solidaire au plateau :
- un ou plusieurs éléments de butée sur lesquels peuvent prendre simultanément appui les extrémités desdits segments, situées du côté opposé aux extrémités mobiles, dites extrémités de butée, lors d'une activation dudit dispositif dans le premier mode de fonctionnement,
- ou au moins un deuxième actionneur, fixé au plateau par un boîtier principal, ledit deuxième actionneur étant agencé pour pouvoir écarter l'une de l'autre les extrémités de butée, et mettre ainsi lesdits segments en appui contre la piste de frottement du tambour, permettant ainsi par frottement de transmettre un couple de freinage ou de maintien entre ledit tambour et l'un des segments, lequel prend appui par son extrémité mobile sur ledit élément intercalaire, lequel prend appui sur l'extrémité mobile de l'autre segment, lequel transmet ledit couple de freinage ou de maintien au plateau support en prenant appui sur ledit boîtier par son extrémité de butée, assurant ainsi une fonction de freinage dans un deuxième mode de fonctionnement.

Le dispositif de frein à tambour selon l'invention permet de proposer un dispositif offrant une flexibilité quant au montage des différents éléments existants et à venir afin de réaliser les fonctions de frein de service, frein de stationnement et de frein de secours.

De préférence, le plateau support présente au moins une ouverture traversante formant les moyens de positionnement et de fixation permettant de recevoir indifféremment le ou les éléments de butée ou le boîtier principal de l'au moins un deuxième actionneur. Ainsi, il est possible de loger au choix différents éléments tels qu'un actionneur ou un élément de butée sans modifier par exemple toute la conception du plateau support.

Selon un mode de réalisation préféré, l'au moins une ouverture a une forme sensiblement rectangulaire. Selon d'autres modes de réalisation, l'au moins une ouverture peut être sensiblement triangulaire ou circulaire ou encore avoir la forme d'un parallélogramme ou d'un parallélépipède. De plus, selon d'autres modes de réalisation l'au moins une ouverture peut être de dimensions variables suivant l'élément à loger sur le plateau support. Cela a pour avantage de faciliter l'intégration des différents éléments existants et également les nouveaux éléments à venir.

Selon un mode de réalisation préféré, le boîtier principal comprend une surface d'appui principale, de préférence plane, agencée pour prendre appui par contact complémentaire contre le plateau support en au moins deux régions situées de deux côtés opposés autour de l'au moins une ouverture. De préférence, la surface d'appui principale s'étend au-delà du contour de l'ouverture. De cette manière, l'étanchéité par rapport à la poussière est assurée entre le milieu extérieur et d'une part l'intérieur du boîtier principal et d'autre part l'espace à l'intérieur du tambour.

Selon l'invention, le boîtier principal du deuxième actionneur comprend au moins un ou plusieurs linguets de fixation, et notamment deux, munis chacun d'au moins un orifice de fixation positionné pour coopérer avec un orifice du plateau pour recevoir des moyens de serrage du deuxième actionneur contre ledit plateau support.

De préférence, le boîtier principal comprend deux linguets de fixation s'étendant dans le même plan que celui de la surface d'appui principale et s'appuyant contre le plateau support aux abords de l'ouverture. De plus, un orifice de fixation est réalisé au niveau de chaque linguet de fixation. Judicieusement les orifices de fixation correspondent avec des trous réalisés dans le plateau support afin de rendre le deuxième actionneur solidaire du plateau de préférence par rivetage. D'autres modes de réalisation sont possibles où plusieurs linguets et plusieurs orifices de fixation sont prévus.

Avantageusement, le boîtier principal est positionné dans l'ouverture par au moins une première avancée qui dépasse de la surface d'appui principale. Selon un mode de réalisation préféré, la première avancée s'étend sensiblement dans une direction transversale, de préférence perpendiculaire au plan de la surface d'appui principale depuis la surface d'appui principale et présente une hauteur non nulle afin que la première avancée puisse s'appuyer contre la tranche de l'ouverture ; la surface d'appui principale s'appuyant contre la surface du plateau support.

En outre, le deuxième actionneur est renfermé par assemblage du boîtier principal avec un boîtier secondaire s'étendant à travers l'ouverture du plateau et qui est assemblé avec le boîtier principal par positionnement au contact d'au moins une deuxième avancée dépassant d'une deuxième surface d'appui formée par un épaulement issu de la première avancée du boîtier principal ; le boîtier secondaire venant en appui contre la deuxième surface d'appui, le boîtier principal et le boîtier secondaire renfermant le deuxième actionneur. Selon un mode de réalisation préféré, la deuxième avancée s'étend sensiblement dans une direction transversale, de préférence perpendiculaire au plan de la surface d'appui principale depuis la deuxième surface d'appui issue de la première avancée et présente une hauteur non nulle afin que la deuxième avancée puisse s'appuyer contre la surface intérieure du boîtier secondaire ; le boîtier secondaire s'appuyant contre la deuxième surface d'appui issue de la première avancée. La deuxième surface d'appui issue de la première avancée correspond à la surface plane s'étendant dans un plan parallèle au plan de la surface d'appui principale. Selon un mode de réalisation préféré, la deuxième surface d'appui a une largeur non nulle, de préférence comprise entre 5 et 25 millimètres.

Ces caractéristiques ont pour avantages d'une part d'offrir un très bon centrage des différentes pièces entre elles et notamment du boîtier principal par rapport à l'ouverture et d'autre part d'assurer l'étanchéité par rapport à la poussière entre le milieu extérieur et l'espace à l'intérieur du tambour et l'espace à l'intérieur des boîtiers même sans ajout de joints d'étanchéité.

Selon l'invention, le boîtier secondaire est fixé par pincement entre le plateau support et le boîtier principal qui présente sur son pourtour au moins un ou plusieurs évidements traversant l'ouverture du plateau et s'étendant contre la surface du plateau du côté du boîtier principal, pour accueillir chacun une patte de fixation du boîtier secondaire ; lesdites pattes de fixation du boîtier secondaire étant ainsi serrées entre le boîtier principal et le plateau support. Selon un mode de réalisation préféré, les deux avancées sont traversées par au moins un évidement dans lequel vient s'encastrer une patte de fixation qui dépasse du boîtier secondaire. L'évidement se poursuit jusqu'à avancer dans la surface d'appui principale du boîtier principal, où il reçoit l'extrémité de cette patte de fixation. Celle-ci est dimensionnée d'une épaisseur suffisante par rapport à l'évidement pour être serrée fortement entre le boîtier principal et le plateau lorsqu'ils sont fixés l'un à l'autre.

Selon d'autres modes de réalisation, le plateau support peut présenter au moins un évidement sur le pourtour de l'au moins une ouverture pour accueillir au moins une patte de fixation du boîtier secondaire.

Ces dispositions ont pour avantages, en plus d'assurer une étanchéité comme précédemment, de limiter par exemple le nombre de vis et/ou d'écrous facilitant ainsi le processus d'assemblage des différents éléments du dispositif.

Avantageusement, le boîtier secondaire est fixé au boîtier principal par un élément de fixation unique, notamment une unique vis.

Selon l'invention, un boîtier de motoréducteur, renfermant un élément motoréducteur de forme allongée, entraînant le deuxième actionneur, est fixé au boîtier secondaire ; l'élément motoréducteur étant placé longitudinalement dans une direction sensiblement perpendiculaire par rapport à l'axe du plateau support et du côté opposé au boîtier principal par rapport au plateau.

Selon un mode de réalisation préféré, le boîtier de motoréducteur s'étend sensiblement dans une direction horizontale.

Selon encore un mode particulier de réalisation l'élément motoréducteur est fixé par l'une de ses extrémités et est en porte à faux par rapport au boîtier secondaire.

Selon une particularité de l'invention, le boîtier principal, le boîtier secondaire et/ou le boîtier de motoréducteur sont réalisés en matières plastiques. En variante, le boîtier principal est réalisé en métal, notamment une fonte d'aluminium.

Selon un deuxième aspect de l'invention, l'invention propose un véhicule ou sous-ensemble de véhicule comprenant un dispositif de frein à tambour conforme au premier aspect.

Selon un troisième aspect de l'invention, en particulier conforme aux aspects précédents, l'invention propose un procédé d'assemblage d'un mécanisme de frein à tambour comprenant un premier et un deuxième segment munis de garnitures de frottement dirigées vers l'extérieur, qui sont coiffés par ledit tambour et sont montés sur un plateau de façon à pouvoir transmettre audit plateau un couple de freinage ou de maintien par absorption d'énergie sous l'effet d'un frottement avec une piste de frottement cylindrique portée par l'intérieur dudit tambour lorsque des extrémités dites mobiles desdits segments sont écartées vers l'extérieur, sous l'effet d'un premier actionneur, tandis que leurs extrémités opposées dites extrémités de butée prennent appui simultanément sur au moins un moyen d'ancrage solidaire du plateau.

Le procédé comprend les opérations suivantes, dans cet ordre ou dans un autre ordre :
- réaliser ou fournir un plateau comprenant des moyens de positionnement et de fixation permettant de recevoir indifféremment plusieurs types de moyens d'ancrage ;
- choisir un moyen d'ancrage au sein d'un choix comprenant une plaque de butée passive agencée pour réaliser ledit moyen d'ancrage, et un deuxième actionneur dont une partie de butée est agencée pour réaliser ledit moyen d'ancrage ;
- dans le cas d'une plaque de butée : montage et fixation sur ledit plateau support de la plaque de butée dans une position où elle est apte à recevoir l'appui simultané des extrémités de butée lors de l'activation du premier actionneur, ou alternativement,
- dans le cas d'un deuxième actionneur : montage et fixation du deuxième actionneur dans une position où il est apte à :
   ∘ recevoir l'appui simultané des extrémités de butée sur sa partie de butée lors de l'activation du premier actionneur, réalisant ainsi un premier mode de fonctionnement (notamment selon un mode de type appelé "simplex") fournissant un premier mode de freinage, notamment de frein de service, et
   ∘ écarter l'une de l'autre les extrémités de butée et mettre ainsi lesdits segments en appui contre la piste de frottement du tambour, permettant ainsi par frottement de transmettre un couple de freinage ou de maintien entre ledit tambour et l'un des segments, lequel prend appui par son extrémité mobile sur un élément intercalaire mobile par rapport au plateau, lequel élément intercalaire prend appui sur l'extrémité mobile de l'autre segment, lequel transmet ledit couple de freinage ou de maintien au plateau support en prenant appui par son extrémité de butée sur ladite partie de butée dudit deuxième actionneur, réalisant ainsi un deuxième mode de fonctionnement (notamment selon un mode de type appelé "duo servo") fournissant un deuxième mode de freinage, notamment de frein de stationnement et/ou de secours.

De cette manière, il est facile d'intégrer différents éléments dans le processus de montage de dispositif de frein à tambour.

Selon un quatrième aspect, l'invention propose un procédé, en particulier conforme à l'aspect précédent, dans lequel le plateau et le deuxième actionneur sont choisis pour réaliser un dispositif de frein à tambour selon le premier aspect.

De plus selon un cinquième aspect de l'invention, il est prévu un procédé de montage et de fixation du deuxième actionneur, en particulier conforme à l'un ou plusieurs des deux aspects précédents, comprenant les étapes suivantes :
- assemblage d'un boîtier secondaire du deuxième actionneur avec un boîtier principal du deuxième actionneur portant une surface d'appui principale de forme complémentaire à la surface du plateau, puis
- insertion du boîtier secondaire du deuxième actionneur dans une ouverture traversante portée par le plateau et positionnement dudit deuxième actionneur par centrage au contact entre le pourtour de ladite ouverture du plateau et une surface extérieure d'une première avancée dépassant de la surface d'appui principale du boîtier principal,
- fixation du boîtier principal par serrage de sa surface d'appui principale contre la surface du plateau de façon à y enserrer une ou plusieurs pattes de fixation du boîtier secondaire qui s'étendent au travers de l'ouverture et dans un ou plusieurs évidements ménagés entre le plateau et ladite surface d'appui principale.

Selon un sixième aspect de l'invention, en particulier conforme à l'un ou plusieurs des trois aspects précédents, le procédé comprend en outre une étape ultérieure de positionnement et fixation d'un élément motoréducteur via un boîtier de motoréducteur, du côté du plateau opposé au boîtier principal, dans un logement de motoréducteur du boîtier secondaire du deuxième actionneur.

Selon encore un autre aspect de l'invention, en particulier conforme à l'un ou plusieurs des aspects précédents, l'invention propose un procédé d'assemblage d'un véhicule ou sous-ensemble de véhicule qui comprend un assemblage et/ou un montage d'un dispositif de frein à tambour tel qu'exposé ici.

Ces particularités confèrent à l'invention plusieurs avantages. Elles permettent d'offrir une flexibilité de choix de montage des différents éléments existants afin de réaliser les fonctions de frein de service et de frein de stationnement selon une méthode ou une autre. De plus, de par la forme standard du plateau support ainsi réalisé, le plateau support devient compatible avec des éléments qui résulteraient des évolutions techniques des modes de commande des organes automobiles, par exemple par commande électrique. En outre les modifications apportées sont simples puisqu'il faut fixer les différents éléments sensiblement de la même manière qu'une plaque de butée sur un plateau support actuellement, c'est-à-dire par exemple par rivetage. Le dispositif ainsi constitué reste économique, et offre un nombre de pièces réduit, une facilité et une économie de fabrication et/ou d'assemblage et/ou de maintenance, tout en conservant tout ou partie des avantages des dispositifs existants. Grâce aux formes complémentaires de la butée et du boîtier principal, associé avec le boîtier secondaire, par rapport au plateau support, l'étanchéité entre le milieu extérieur et l'espace à l'intérieur du tambour est assurée tout en conservant l'aptitude à transmettre les efforts de freinage ou les efforts de maintien depuis les segments jusqu'au plateau support.

L'invention permet d'améliorer la flexibilité de conception du frein et du véhicule qui le porte, et de leur fabrication au sein de chaînes de fabrication pouvant travailler sur plusieurs modèles différents ou assemblés avec des options différentes.

### Liste des figures

D'autres particularités et avantages de l'invention apparaîtront à la lecture de la description détaillée de mises en oeuvre et de modes de réalisation nullement limitatifs, et des dessins annexés où :
- la FIGURE 1 est une vue de face, selon l'axe de rotation, illustrant un exemple d'art antérieur d'un mécanisme de frein à tambour de type simplex avec une fonction de frein de stationnement obtenue par un levier actionné par câble ;
- la FIGURE 2 est une vue en perspective d'un mécanisme de frein à tambour "bi-mode" dans un exemple de mode de réalisation de l'invention ;
- la FIGURE 3 est une vue en perspective illustrant selon l'invention différentes possibilités de montage d'un frein à tambour : avec une plaque de butée ou un deuxième actionneur sur un même plateau support ;
- la FIGURE 4 est une vue en perspective d'un éclaté du deuxième actionneur avec notamment le boîtier secondaire et le boîtier principal selon un mode de réalisation préféré ;
- la FIGURE 5 est une vue en perspective d'un éclaté représentant le montage du deuxième actionneur et de son élément motoréducteur sur le plateau support ;
- la FIGURE 6 est une vue en perspective du deuxième actionneur fixé sur le plateau support.

### Description des figures et modes de réalisation

Ces modes de réalisation n'étant nullement limitatifs, on pourra notamment réaliser des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur.

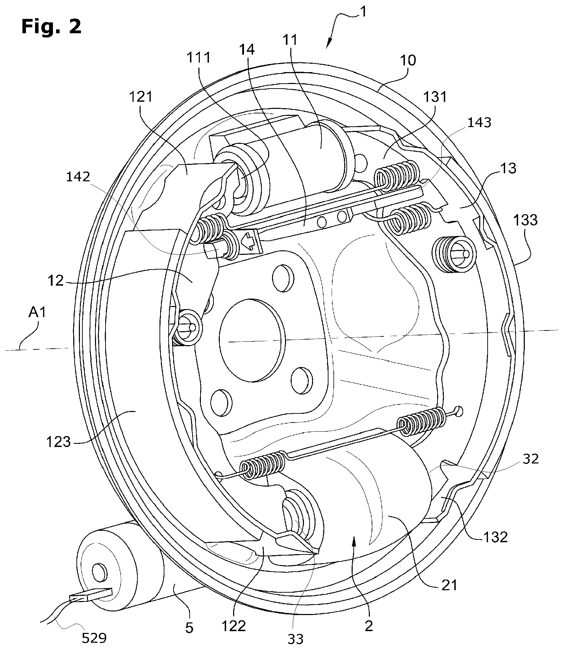

La FIGURE 2 représente un mécanisme de frein à tambour "bi-mode" dans un exemple de mode de réalisation de l'invention où plus particulièrement le plateau support 10 présente une ouverture afin de loger le deuxième actionneur 2. Ce mode de réalisation peut être mis en oeuvre avec différents types d'actionneurs pour le mode de frein de service, et différents type de motorisation pour l'actionneur de frein de stationnement ou de secours.

Ce frein à tambour 1 provoque un couple de freinage entre le tambour (non représenté ici) et le plateau 10 en mouvement de rotation l'un par rapport à l'autre autour d'un axe de rotation A1. Dans une architecture classique de véhicule routier, le plateau 10 est fixé en rotation sur le châssis du véhicule, en général par l'intermédiaire d'un train ou d'un demi-train roulant suspendu. Le tambour est solidaire de la roue, et est fixé en translation et guidé en rotation autour de l'axe A1 par le moyeu et ses roulements, non représentés ici.

En mode frein de service, le couple de freinage est créé par absorption d'énergie sous l'effet d'un frottement entre :
- d'une part, la piste de frottement portée par une surface intérieure dudit tambour, de façon similaire au tambour de la FIGURE 1,
- et d'autre part des garnitures de frottement 123, 133 portées par un premier et un deuxième segments 12, 13.

Ce frottement est susceptible d'être obtenu par écartement des segments vers l'extérieur sous l'effet d'un premier actionneur 11, ici un vérin hydraulique qui peut être fixé au plateau 10. Depuis la position de repos ou depuis la position de freinage de stationnement, ce premier actionneur 11 amène ainsi le mécanisme en position de freinage de service, et le retour à la position de repos est réalisé par exemple par des ressorts de rappel reliant entre eux les deux segments, comme illustré en FIGURE 2.

Dans cet exemple, le frein à tambour est agencé pour fonctionner en mode simplex lorsqu'il est actionné en tant que frein de service : le premier actionneur 11 est un "cylindre de roue" à deux pistons 111 opposés, qui actionnent chacun l'un des segments 12, 13 en écartant l'une de l'autre leurs deux extrémités en vis-à-vis 121, 131, c'est-à-dire celles situées d'un même côté de l'axe de rotation A1, ici appelées "extrémités mobiles" et situées en haut de la figure. A son extrémité opposée 122, 132, dite extrémité de butée, chaque segment s'appuie sur le plateau 10 par un élément d'ancrage solidaire du plateau, et formant ainsi une butée pour ce segment. L'élément d'ancrage sert ainsi d'élément de transmission du couple de freinage entre les segments et le plateau 10. Dans cet exemple, l'élément d'ancrage des deux segments est réalisé par un boîtier 21 du deuxième actionneur 2, ici appelé écarteur. Le deuxième actionneur 2 est fixé au plateau 10 par son boîtier 21. Dans l'exemple illustré par la FIGURE 1, l'élément d'ancrage est réalisé par une plaque de butée 94 en général rivetée sur le plateau support 10.

L'écarteur 2 comprend un ensemble d'actionnement qui, en mode frein de stationnement ou de secours, appuie sur les extrémités de butée 122, 132 des segments 12, 13 pour les écarter l'une de l'autre, et mettre ainsi les segments en appui contre la piste de frottement du tambour.

Depuis la position de repos, ou depuis la position de freinage de service, ce deuxième actionneur 2 amène ainsi le mécanisme en position de freinage de stationnement, et le retour à la position de repos est réalisé par exemple par les ressorts de rappel déjà décrits pour le frein de service.

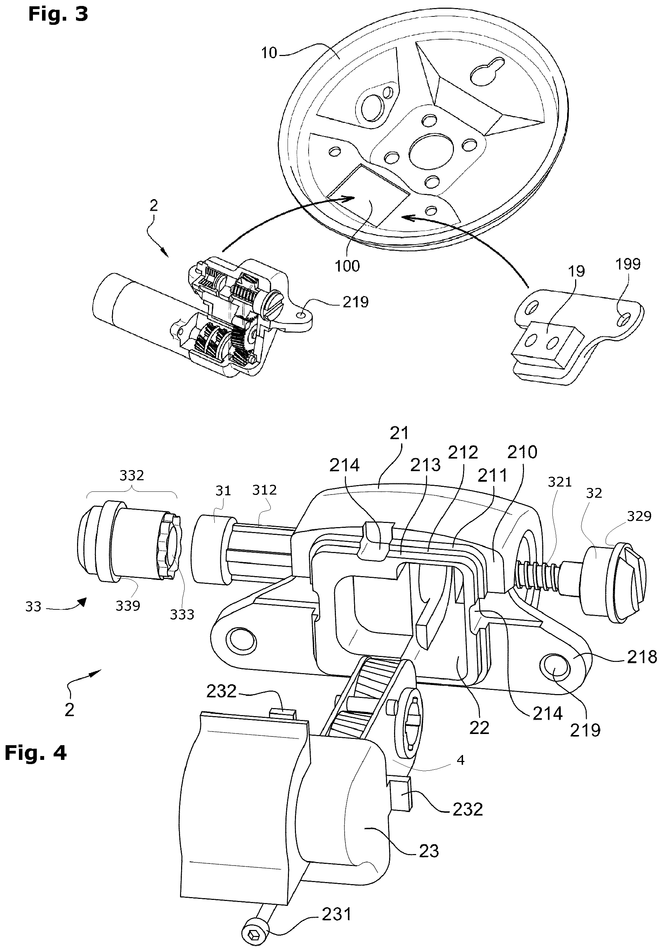

La FIGURE 3 illustre un plateau support 10 permettant avantageusement de réaliser plusieurs types de frein à tambour.

Au cours du processus de conception, mais aussi au cours du processus de fabrication en usine, l'invention prévoit de choisir entre plusieurs possibilités, possiblement même lorsque le plateau est déjà fixé sur le véhicule ou sur un sous ensemble de véhicule.

Selon une autre particularité, le plateau support présente plusieurs ouvertures concentriques prédécoupées. Le montage comprend alors une opération d'estampage du plateau support pour obtenir l'ouverture désirée en fonction de l'élément à intégrer.

Une possibilité prévue est de fixer dans l'ouverture 100 du plateau un écarteur 2 comme décrit ci-dessus, pour réaliser un frein à tambour bi-mode fonctionnant en simplex en tant que frein de service et en duo-servo en tant que frein électrique de stationnement ou de secours. L'écarteur 2 comprend deux linguets de fixation 218, qui comportent des orifices de fixation 219, permettant de placer et fixer l'écarteur 2 sur le plateau support 10.

Une autre possibilité prévue est de fixer dans l'ouverture 100 du même plateau une plaque de butée 19 inerte, préalablement fabriquée à cet effet. Une telle plaque de butée comporte également des orifices de fixation 199 réalisés dans deux pattes de fixation de la plaque de butée, permettant de la même façon de placer et fixer la plaque de butée 19 sur le plateau support 10.

Une fois placés sur le plateau support 10, les orifices de fixation 199 ou 219, respectivement des pattes de la plaque de butée et des linguets de l'écarteur, sont en vis-à-vis avec des trous réalisés dans le plateau support.

De plus la face, de la plaque de butée 19 et du deuxième actionneur 2, ou même encore un autre élément, au contact du plateau support 10 porte des formes d'assemblage identiques permettant de monter sélectivement dans la même ouverture 100 les différents éléments cités précédemment, et ainsi permettre sélectivement la réalisation simple et flexible d'un frein à tambour 9 d'un type connu fonctionnant uniquement en simplex, par exemple avec un levier de frein de stationnement 97 actionné par câble de commande 99 comme celui de la FIGURE 1.

La FIGURE 4 illustre plus particulièrement la forme d'assemblage de l'écarteur 2 par rapport au plateau support 10 et à un boîtier secondaire 23.

L'ancrage du boîtier principal 21 sur le plateau support 10 est assuré par une surface d'appui 210 principale de ce boîtier qui est ainsi pressée au contact du plateau. La surface d'appui 210 est sensiblement plane et prend appui contre le plateau support 10 aux abords de l'ouverture 100 en s'étendant au-delà du contour de l'ouverture 100. Comme il est visible sur la FIGURE 4, cette surface d'appui 210 présente une première avancée 211, saillant de la surface d'appui 210 et dépassant au travers de l'ouverture 100 lors de la mise en position sur le plateau 10. La surface extérieure de cette première avancée 211 présente un profil déterminé pour coopérer avec le pourtour de l'ouverture de fixation 100 du plateau et réaliser le centrage du boîtier principal 21 par rapport à cette ouverture 100. Selon le mode de réalisation représenté, la première avancée 211 s'étend sensiblement dans une direction transversale, de préférence perpendiculaire, au plan de la surface d'appui 210 principale depuis la surface d'appui principale et présente une hauteur non nulle afin que la première avancée puisse s'appuyer contre la tranche de l'ouverture 100.

Cette première avancée 211 se termine par un épaulement formant une deuxième surface d'appui 212, sur laquelle vient s'appuyer le boîtier secondaire 23 de l'écarteur 2. Cette deuxième surface d'appui 212 présente une deuxième avancée 213, saillant par rapport à la deuxième surface d'appui 212 et dépassant à l'intérieur du logement du boîtier secondaire 23. La surface extérieure de cette deuxième avancée 213 présente un profil déterminé pour coopérer avec le pourtour de l'ouverture du logement du boîtier secondaire 23 et réaliser le centrage du boîtier secondaire par rapport au boîtier principal 21. De même selon le mode de réalisation représenté, la deuxième avancée 213 s'étend sensiblement dans une direction perpendiculaire (ou à au moins 45° voire 60°) au plan de la surface d'appui 210 principale depuis la deuxième surface d'appui 212. Cette deuxième avancée présente une hauteur non nulle afin de pouvoir s'appuyer contre l'ouverture du logement du boîtier secondaire 23.

Sur plusieurs, ou même chacun, des quatre côtés du logement de transmission 22 du boîtier principal 21, les deux avancées 211, 213 sont traversées par un évidement 214 dans lequel vient s'encastrer une patte de fixation 232 qui dépasse du boîtier secondaire 23. L'évidement se poursuit jusqu'à avancer dans la surface d'appui principale 210 du boîtier principal 21, où il reçoit l'extrémité coudée vers l'extérieur de cette patte de fixation 232. Celle-ci est dimensionnée d'une épaisseur suffisante par rapport à l'évidement 214 pour être serrée fortement entre le boîtier principal 21 et le plateau 10 lorsqu'ils sont fixés l'un à l'autre. De préférence, la patte de fixation 232 a une forme générale sensiblement rectangulaire dans le plan de la surface d'appui principale 210.

Ainsi, la fixation du boîtier principal 21 sur le plateau réalise aussi le serrage de son assemblage avec le boîtier secondaire. L'assemblage préalable des deux boîtiers 21, 23 ne nécessite que pas ou peu de moyens de fixation, par exemple un simple encliquetage ou une unique vis 231 comme illustré en FIGURE 4.

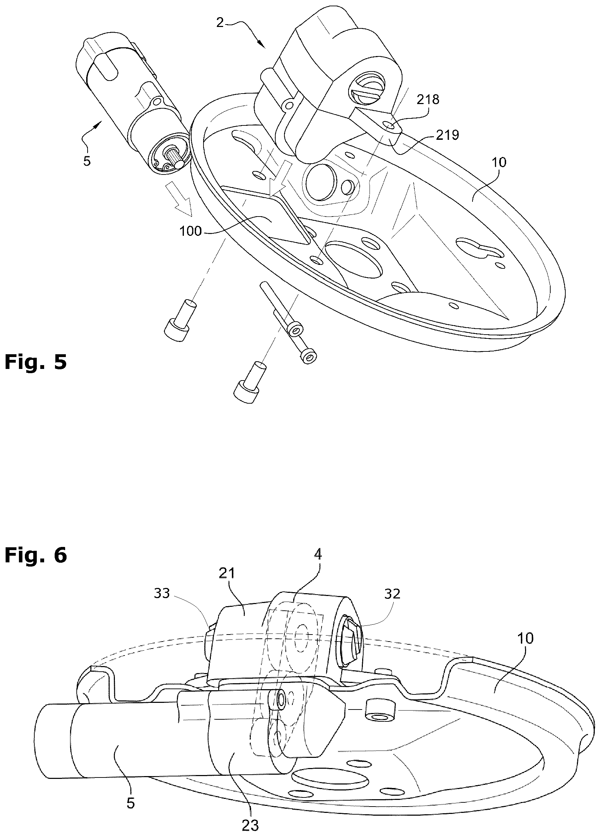

Comme illustré en FIGURE 5, l'écarteur 2 est monté et fixé sur le plateau support 10, engagé de façon étanche dans l'ouverture 100 du côté intérieur du plateau. L'élément motoréducteur 5 est alors assemblé sur l'écarteur 2 via le boîtier de motoréducteur, sur la partie de son boîtier secondaire 23 qui dépasse du plateau du côté opposé aux segments, c'est-à-dire du côté "arrière" du plateau.

A la FIGURE 6, le deuxième actionneur 2 est fixé sur le plateau support 10. L'élément motoréducteur est alors placé dans une direction sensiblement perpendiculaire par rapport à l'axe A1 du plateau support 10 et plus précisément dans une direction parallèle au plan de la surface d'appui principale 210. De plus l'élément motoréducteur 5 est en porte à faux par rapport au boîtier secondaire 23.

Ainsi, en adoptant un plateau 10 compatible avec l'écarteur 2, et en prévoyant une simple plaque de butée 19 adaptée à ce plateau, il est possible de prévoir ou de poursuivre la fabrication d'un véhicule doté d'un frein à tambour d'un type classique, tout en bénéficiant à tout moment de la possibilité de choisir le montage d'un frein bi-mode à frein de stationnement électrique.

Le plateau 10 et la plaque de butée 19 représentent un coût extrêmement faible et des contraintes faibles ou inexistantes sur la conception et la fabrication.

Il est ainsi possible par exemple de prévoir des gammes de véhicules avec différentes options de types de frein, de limiter les approvisionnements au sein d'une même chaîne de montage, ou d'adapter des chaînes existantes ou des modèles de véhicule existants pour les doter de ces différentes options, à moindre coût et de façon souple.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

### Nomenclature

- 1: frein à tambour
- 10: plateau support
- 100: ouverture de fixation de point d'appui
- 11: premier actionneur - cylindre de roue - frein de service
- 111: pistons de cylindre de roue
- 12, 13: segments
- 121, 131: extrémités mobiles des segments
- 122, 132: extrémités de butée des segments
- 123, 133: garnitures de frottement
- 14: élément intercalaire - biellette de rattrapage de jeu
- 16: piste de frottement du tambour
- 19: plaque de butée de frein en version uniquement simplex
- 199: orifices de fixation de plaque de butée
- 2: deuxième actionneur - écarteur - frein de stationnement
- 21: boîtier principal d'écarteur
- 210: surface d'appui principale (première feuillure)
- 211: première avancée - centrage sur plateau (première feuillure)
- 212: épaulement formant la deuxième surface d'appui (deuxième feuillure)
- 213: deuxième avancée - centrage du boîtier secondaire (deuxième feuillure)
- 214: évidement accueillant une patte de fixation du boîtier secondaire
- 218: linguets de fixation de boîtier principal
- 219: orifices de fixation de boîtier principal
- 22: logement de la cartouche dans le boîtier principal
- 23: boîtier secondaire d'écarteur
- 231: vis de fixation du boîtier secondaire sur le boîtier principal
- 232: pattes de fixation du boîtier secondaire
- 5: ensemble motoréducteur

### Art Antérieur

- 9: frein à tambour
- 90: plateau support
- 91: actionneur
- 92, 93: segments
- 923, 933: garnitures de frottement
- 94: plaque de butée
- 95: tambour de roue
- 96: piste de frottement du tambour
- 97: levier de frein de stationnement
- 98: élément de réaction du frein de stationnement
- 99: câble de commande de frein de stationnement

## Revendications

1. Dispositif de frein à tambour (1) pour véhicule automobile, du type provoquant un couple de freinage entre un tambour et un plateau support (10) en mouvement de rotation l'un par rapport à l'autre, par absorption d'énergie sous l'effet d'un frottement entre, d'une part, une piste de frottement formant un cylindre de révolution et portée par une surface intérieure dudit tambour, et d'autre part des garnitures de frottement (123, 133) portées par un premier et un deuxième segments (12, 13) disposés à l'intérieur dudit cylindre et transmettant au moins ou partie le couple de freinage entre segment et plateau support (10) par au moins un élément dit d'ancrage formant une butée pour lesdits segments par rapport au plateau support (10), ledit frottement étant susceptible d'être obtenu par écartement d'au moins l'un desdits segments (12, 13) vers l'extérieur sous l'effet d'au moins un premier actionneur (11), assurant ainsi une fonction de freinage dans un premier mode de fonctionnement,
ledit dispositif étant **caractérisé en ce qu'**il comprend un élément dit intercalaire (14), qui est mobile par rapport au plateau (10), et qui est agencé pour maintenir écartées l'une de l'autre des extrémités desdits segments (12, 13) qui sont en vis à vis l'une de l'autre, dites extrémités mobiles (121, 131),
et **en ce qu'**il comprend en outre des moyens de positionnement et de fixation prévus pour recevoir indifféremment, par fixation solidaire au plateau :
- un ou plusieurs éléments de butée (19) sur lesquels peuvent prendre simultanément appui les extrémités desdits segments (12, 13) situées du côté opposé aux extrémités mobiles, dites extrémités de butée (122, 132), lors d'une activation dudit dispositif dans le premier mode de fonctionnement,
- ou au moins un deuxième actionneur (2) fixé au plateau par un boîtier principal (21), ledit deuxième actionneur (2) étant agencé pour pouvoir écarter l'une de l'autre les extrémités de butée (122, 132), et mettre ainsi lesdits segments (12, 13) en appui contre la piste de frottement du tambour, permettant ainsi par frottement de transmettre un couple de freinage ou de maintien entre ledit tambour et l'un des segments (12, 13), lequel prend appui par son extrémité mobile (121, 131) sur ledit élément intercalaire (14), lequel prend appui sur l'extrémité mobile (121, 131) de l'autre segment (12, 13), lequel transmet ledit couple de freinage ou de maintien au plateau support (10) en prenant appui sur ledit boîtier (21) par son extrémité de butée (122, 132), assurant ainsi une fonction de freinage dans un deuxième mode de fonctionnement.

2. Dispositif de frein à tambour (1) pour véhicule selon la revendication 1, **caractérisé en ce que** le plateau support (10) présente au moins une ouverture (100) traversante formant les moyens de positionnement et de fixation permettant de recevoir indifféremment le ou les éléments de butée (19) ou le boîtier principal (21) de l'au moins un deuxième actionneur (2).

3. Dispositif de frein à tambour (1) pour véhicule selon la revendication précédente, **caractérisé en ce que** le boîtier principal (21) comprend une surface d'appui principale (210), de préférence plane, agencée pour prendre appui par contact complémentaire contre le plateau support (10) en au moins deux régions situées de deux côtés opposés autour de l'au moins une ouverture (100).

4. Dispositif de frein à tambour (1) pour véhicule selon la revendication précédente, **caractérisé en ce que** le boîtier principal (21) du deuxième actionneur (2) comprend au moins un ou plusieurs linguets de fixation (218), et notamment deux, munis chacun d'au moins un orifice de fixation (219) positionné pour coopérer avec un orifice du plateau pour recevoir des moyens de serrage du deuxième actionneur (2) contre ledit plateau support (10).

5. Dispositif de frein à tambour (1) pour véhicule selon la revendication 3 ou 4, **caractérisé en ce que** le boîtier principal (21) est positionné dans l'ouverture (100) par au moins une première avancée (211) qui dépasse de la surface d'appui principale (210).

6. Dispositif de frein à tambour (1) pour véhicule selon la revendication précédente, **caractérisé en ce que** le deuxième actionneur est renfermé par assemblage du boîtier principal (21) avec un boîtier secondaire (23) s'étendant à travers l'ouverture (100) du plateau et qui est assemblé avec le boîtier principal (21) par positionnement au contact d'au moins une deuxième avancée (213) dépassant d'une deuxième surface d'appui (212) formée par un épaulement issu de la première avancée (211) du boîtier principal ; le boîtier secondaire (23) venant en appui contre la deuxième surface d'appui (212).

7. Dispositif de frein à tambour (1) pour véhicule selon la revendication précédente, **caractérisé en ce que** le boîtier secondaire (23) est fixé par pincement entre le plateau support (10) et le boîtier principal (21) qui présente sur son pourtour un ou plusieurs évidements (214) traversant l'ouverture du plateau et s'étendant contre la surface du plateau du côté du boîtier principal, pour accueillir chacun une patte de fixation (232) du boîtier secondaire (23) ; lesdites pattes de fixation (232) du boîtier secondaire (23) étant ainsi serrées entre le boîtier principal (21) et le plateau support (10).

8. Dispositif de frein à tambour (1) pour véhicule selon la revendication précédente, **caractérisé en ce que** le boîtier secondaire (23) est fixé au boîtier principal (21) par un élément de fixation unique, notamment une unique vis (231).

9. Dispositif de frein à tambour (1) pour véhicule selon la revendication 6, **caractérisé en ce qu'**un boîtier de motoréducteur, renfermant un élément motoréducteur (5) de forme allongée, entraînant le deuxième actionneur, est fixé au boîtier secondaire (23) ; l'élément motoréducteur (5) étant placé longitudinalement dans une direction sensiblement perpendiculaire par rapport à l'axe de rotation A1 du plateau support (10) et du côté opposé au boîtier principal (21) par rapport au plateau (10).

10. Dispositif de frein à tambour (1) pour véhicule selon la revendication précédente, **caractérisé en ce que** l'élément motoréducteur (5) est fixé par l'une de ses extrémités et est en porte à faux par rapport au boîtier secondaire (23).

11. Dispositif de frein à tambour (1) pour véhicule selon l'une des revendications précédentes, **caractérisé en ce que** le boîtier principal (21), le boîtier secondaire (23) et/ou le boîtier de motoréducteur sont réalisés en matières plastiques ou en fonte d'aluminium.

12. Véhicule ou sous-ensemble de véhicule comprenant un dispositif de frein à tambour (1) selon l'une quelconque des revendications précédentes.

13. Procédé d'assemblage d'un mécanisme de frein à tambour (1) comprenant un premier (12) et un deuxième (13) segment munis de garnitures de frottement (123, 133) dirigées vers l'extérieur, qui sont coiffés par ledit tambour et sont montés sur un plateau (10) de façon à pouvoir transmettre au dit plateau un couple de freinage ou de maintien par absorption d'énergie sous l'effet d'un frottement avec une piste de frottement cylindrique portée par l'intérieur dudit tambour lorsque des extrémités dites mobiles (121, 131) desdits segments (12, 13) sont écartées vers l'extérieur, sous l'effet d'un premier actionneur (11), tandis que leurs extrémités opposées dites extrémités de butée prennent appui simultanément sur au moins un moyen d'ancrage solidaire du plateau,
ledit procédé étant **caractérisé en ce qu'**il comprend les opérations suivantes, dans cet ordre ou dans un autre ordre :
- réaliser ou fournir un plateau comprenant des moyens de positionnement et de fixation permettant de recevoir indifféremment plusieurs types de moyens d'ancrage ;
- choisir un moyen d'ancrage au sein d'un choix comprenant une plaque de butée (19) passive agencée pour réaliser ledit moyen d'ancrage, et un deuxième actionneur (2) dont une partie de butée (21) est agencée pour réaliser ledit moyen d'ancrage ;
- dans le cas d'une plaque de butée : montage et fixation sur ledit plateau support (10) de la plaque de butée (19) dans une position où elle est apte à recevoir l'appui simultané des extrémités de butée lors de l'activation du premier actionneur (11), ou alternativement,
- dans le cas d'un deuxième actionneur : montage et fixation du deuxième actionneur (2) dans une position où il est apte à :
∘ recevoir l'appui simultané des extrémités de butée sur sa partie de butée (21) lors de l'activation du premier actionneur (11), réalisant ainsi un premier mode de fonctionnement (notamment selon un mode de type appelé "simplex") fournissant un premier mode de freinage, notamment de frein de service, et
∘ écarter l'une de l'autre les extrémités de butée (122, 132) et mettre ainsi lesdits segments (12, 13) en appui contre la piste de frottement du tambour, permettant ainsi par frottement de transmettre un couple de freinage ou de maintien entre ledit tambour et l'un des segments (12, 13), lequel prend appui par son extrémité mobile (121, 131) sur un élément intercalaire (14) mobile par rapport au plateau (10), lequel élément intercalaire prend appui sur l'extrémité mobile (121, 131) de l'autre segment (12, 13), lequel transmet ledit couple de freinage ou de maintien au plateau support (10) en prenant appui par son extrémité de butée (122, 132) sur ladite partie de butée (21) dudit deuxième actionneur, réalisant ainsi un deuxième mode de fonctionnement (notamment selon un mode de type appelé "duo servo") fournissant un deuxième mode de freinage, notamment de frein de stationnement et/ou de secours.

14. Procédé selon la revendication précédente, **caractérisé en ce que** le plateau et le deuxième actionneur sont choisis pour réaliser un dispositif de frein à tambour selon l'une quelconque des revendications 1 à 10.

15. Procédé selon la revendication précédente, **caractérisé en ce que** l'étape de montage et fixation du deuxième actionneur (2) comprend les opérations suivantes :
- assemblage d'un boîtier secondaire du deuxième actionneur avec un boîtier principal du deuxième actionneur portant une surface d'appui principale (210) de forme complémentaire à la surface du plateau (10), puis
- insertion du boîtier secondaire (23) du deuxième actionneur (2) dans une ouverture (100) traversante portée par le plateau (10) et positionnement dudit deuxième actionneur par centrage au contact entre le pourtour de ladite ouverture (100) du plateau et une surface extérieure d'une première avancée (211) dépassant de la surface d'appui principale (210) du boîtier principal (21),
- fixation du boîtier principal (21) par serrage de sa surface d'appui principale (210) contre la surface du plateau (10) de façon à y enserrer une ou plusieurs pattes de fixation (232) du boîtier secondaire qui s'étendent au travers de l'ouverture (100) et dans un ou plusieurs évidements (214) ménagés entre le plateau et ladite surface d'appui principale (210).

16. Procédé selon la revendication précédente, **caractérisé en ce qu'**il comprend en outre une étape ultérieure de positionnement et fixation d'un élément motoréducteur (5) via un boîtier de motoréducteur, du côté du plateau opposé au boîtier principal (21), dans un logement de motoréducteur du boîtier secondaire (23) du deuxième actionneur (2).

17. Procédé d'assemblage d'un véhicule ou sous-ensemble de véhicule **caractérisé en ce qu'**il comprend un assemblage et/ou un montage d'un dispositif de frein à tambour selon l'une quelconque des revendications 1 à 11, ou un procédé selon l'une quelconque des revendications 13 à 16.

## Patentansprüche

1. Trommelbremsvorrichtung (1) für Kraftfahrzeug, vom Typ ein Bremsmoment zwischen einer Trommel und einer Ankerplatte (10) bewirkend, die drehbeweglich zueinander angeordnet sind, durch Energieabsorption unter der Wirkung einer Reibung zwischen einerseits einem in Form eines Rotationszylinders ausgebildeten und von einer Innenfläche der Trommel getragenen Reibungsring und anderseits Reibbelägen (123, 133), welche jeweils von einer ersten und von einer zweiten Bremsbacke (12, 13) getragen werden, die jeweils im Inneren des Zylinders angeordnet sind und zumindest oder teilweise das Bremsmoment zwischen Bremsbacke und Ankerplatte (10) durch mindestens ein einen Anschlag für die Bremsbacken gegenüber der Ankerplatte (10) bildendes, sogenanntes Verankerungselement übertragen, wobei die Reibung dadurch erzeugbar ist, dass wenigstens eine der Bremsbacken (12, 13) unter der Wirkung wenigstens eines ersten Stellglieds (11) nach außen gespreizt wird, wobei dadurch eine Bremsfunktion in einem ersten Betriebsmodus gewährleistet wird,
wobei die Vorrichtung **dadurch gekennzeichnet ist, dass** sie ein sogenanntes Abstandselement (14) umfasst, das gegenüber der Ankerplatte (10) beweglich gelagert und derart angeordnet ist, um gegenüber einander liegende Enden der Bremsbacken (12, 13), sogenannte bewegliche Enden (121, 131), auseinander gespreizt zu halten,
und dass sie außerdem Positionierungs- und Befestigungsmittel umfasst, die dafür vorgesehen sind, dass durch kraftschlüssige Befestigung an der Ankerplatte gleichermaßen aufgenommen werden:
- ein oder mehrere Anschlagelemente (19), auf welchen bei Betätigung der Vorrichtung im ersten Betriebsmodus die Enden der an der gegenüberliegenden Seite der beweglichen, sogenannten Anschlagenden (122, 132) gelagerten Bremsbacken (12, 13) gleichzeitig abgestützt werden können,
- oder wenigstens ein zweites, an der Ankerplatte über ein Hauptgehäuse (21) befestigtes Stellglied (2), wobei das zweite Stellglied (2) derart angeordnet ist, um die Anschlagenden (122, 132) auseinander spreizen zu können und somit die Bremsbacken (12, 13) gegen den Reibungsring der Trommel anzudrücken, wobei dadurch ein Brems- bzw. Haltemoment zwischen der Trommel und einer der Bremsbacken (12, 13) durch Reibung übertragen wird, welche durch ihr bewegliches Ende (121, 131) auf dem Abstandselement (14) abgestützt wird, welches auf dem beweglichen Ende (121, 131) der anderen Bremsbacke (12, 13) abgestützt wird, welche das Brems- bzw. Haltemoment an die Ankerplatte (10) überträgt, wobei sie auf dem Gehäuse (21) durch ihr Anschlagende (122, 132) abgestützt wird, wobei damit eine Bremsfunktion in einem zweiten Betriebsmodus gewährleistet wird.

2. Trommelbremsvorrichtung (1) für Kraftfahrzeug nach Anspruch 1, **dadurch gekennzeichnet, dass** die Ankerplatte (10) mindestens eine durchgehende Öffnung (100) aufweist, welche die Positionierungs- und Befestigungsmittel zur gleichermaßen Aufnahme des mindestens einen Anschlagelements (19) oder des Hauptgehäuses (21) des mindestens einen zweiten Stellglieds (2) bildet.

3. Trommelbremsvorrichtung (1) für Kraftfahrzeug nach dem vorangehenden Anspruch, **dadurch gekennzeichnet, dass** das Hauptgehäuse (21) eine bevorzugt ebene Haupftauflagefläche (210) umfasst, derart angeordnet, um durch ergänzenden Kontakt gegen die Ankerplatte (10) an mindestens zwei an zwei gegenüberliegenden Seiten um die wenigstens eine Öffnung (100) angeordneten Bereichen angedrückt zu werden.

4. Trommelbremsvorrichtung (1) für Kraftfahrzeug nach dem vorangehenden Anspruch, **dadurch gekennzeichnet, dass** das Hauptgehäuse (21) des zweiten Stellglieds (2) mindestens einen oder mehrere Befestigungspallen (218), und insbesondere zwei, mit jeweils mindestens einer Befestigungslochung (219) umfasst, welche derart positioniert ist, um mit einer Lochung der Ankerplatte zur Aufnahme von Spannmitteln des zweiten Stellglieds (2) gegen die Ankerplatte (10) zusammenzuwirken.

5. Trommelbremsvorrichtung (1) für Kraftfahrzeug nach dem Anspruch 3 oder 4, **dadurch gekennzeichnet, dass** das Hauptgehäuse (21) in der Öffnung (100) durch wenigstens eine erste, über die Hauptauflagefläche (210) herausragende Auskragung (211) positioniert ist.

6. Trommelbremsvorrichtung (1) für Kraftfahrzeug nach dem vorangehenden Anspruch, **dadurch gekennzeichnet, dass** das zweite Stellglied durch Zusammenstellen des Hauptgehäuses (21) mit einem Zweitgehäuse (23) eingeschlossen ist, das sich durch die Öffnung (100) der Ankerplatte hindurch erstreckt und mit dem Hauptgehäuse (21) durch Positionierung bei Berührung mit mindestens einer zweiten Auskragung (213) zusammengestellt wird, die über eine zweite, durch eine Schulter aus der ersten Auskragung (211) des Hauptgehäuses gebildete Auflagefläche (212) herausragt, wobei das Zweitgehäuse (23) gegen die zweite Auflagefläche (212) angedrückt wird.

7. Trommelbremsvorrichtung (1) für Kraftfahrzeug nach dem vorangehenden Anspruch, **dadurch gekennzeichnet, dass** das Zweitgehäuse (23) durch Klemmen zwischen der Ankerplatte (10) und dem Hauptgehäuse (21) befestigt ist, welches auf seinem Umfang eine oder mehrere Aussparungen (214) aufweist, die durch die Öffnung der Ankerplatte hindurch verlaufen und sich entlang der Oberfläche der Ankerplatte auf der Seite des Hauptgehäuses erstrecken, um jeweils ein Befestigungseisen (232) des Zweitgehäuses (23) aufzunehmen, wobei die Befestigungseisen (232) des Zweitgehäuses (23) somit zwischen dem Hauptgehäuse (21) und der Ankerplatte (10) eingespannt sind.

8. Trommelbremsvorrichtung (1) für Kraftfahrzeug nach dem vorangehenden Anspruch, **dadurch gekennzeichnet, dass** das Zweitgehäuse (23) an dem Hauptgehäuse (21) mittels eines einzelnen Befestigungselements, insbesondere einer einzelnen Schraube (231) befestigt ist.

9. Trommelbremsvorrichtung (1) für Kraftfahrzeug nach Anspruch 6, **dadurch gekennzeichnet, dass** ein Getriebemotorgehäuse, in dem ein längliches, das zweite Stellglied antreibende Getriebemotorelement (5) eingeschlossen ist, am Zweitgehäuse (23) befestigt ist, wobei das Getriebemotorelement (5) längsseitig in einer Richtung im Wesentlichen rechtwinklig gegenüber der Drehachse A1 der Ankerplatte (10) und an der zu dem Hauptgehäuse (21) gegenüberliegenden Seite der Ankerplatte (10) gelagert ist.

10. Trommelbremsvorrichtung (1) für Kraftfahrzeug nach dem vorangehenden Anspruch, **dadurch gekennzeichnet, dass** das Getriebemotorelement (5) an einem seiner Enden befestigt ist und gegenüber dem Zweitgehäuse (23) herausragt.

11. Trommelbremsvorrichtung (1) für Kraftfahrzeug nach einem der vorangehenden Ansprüche, **dadurch gekennzeichnet, dass** das Hauptgehäuse (21), das Zweitgehäuse (23) und/oder das Getriebemotorgehäuse aus Kunststoffen oder aus Aluminiumguss ausgeführt sind.

12. Kraftfahrzeug oder Kraftfahrzeugunteranordnung, eine Trommelbremsvorrichtung (1) nach einem der vorangehenden Ansprüche umfassend.

13. Verfahren zur Zusammenstellung eines Trommelbremsmechanismus (1), umfassend eine erste Bremsbacke (12) und eine zweite Bremsbacke (13) mit nach außen hin gerichteten Reibbelägen (123), welche Bremsbacken durch die Trommel bedeckt und auf einer Ankerplatte (10) derart eingebaut sind, um der Ankerplatte ein Brems- bzw. Haltemoment durch Energieabsorption unter der Wirkung einer Reibung mit einem zylinderförmigen, im Inneren der Trommel einliegenden Reibungsring zu übertragen, wenn sogenannte bewegliche Enden (121, 131) der Bremsbacken (12, 13) unter der Wirkung eines ersten Stellglieds (11) nach außen gespreizt werden, während ihre gegenüberliegenden, sogenannten Anschlagenden auf mindestens einem kraftschlüssigen Verankerungsmittel der Ankerplatte gleichzeitig abgestützt sind,
wobei das Verfahren **dadurch gekennzeichnet ist, dass** es folgende Vorgänge umfasst, in dieser Reihenfolge oder in einer anderen Reihenfolge:
- Herstellung oder zur Verfügungsstellung einer Ankerplatte mit Positionierungs- und Befestigungsmitteln zur Aufnahme gleichermaßen mehrerer Arten von Verankerungsmitteln;
- Auswahl eines Verankerungsmittels innerhalb einer Auswahl, umfassend eine passive, zur Herstellung des Verankerungsmittels ausgebildete Anschlagplatte (19) und ein zweites Stellglied (2), dessen einer Anschlagteil (21) zur Herstellung des Verankerungsmittels ausgebildet ist;
- bei einer Anschlagplatte: Einbau und Befestigung der Anschlagplatte (19) auf der Ankerplatte (10) an einer Stelle, an der sie dazu geeignet ist, bei Betätigung des ersten Stellglieds (11) das gleichzeitige Abstützen der Enden des Anschlags aufzunehmen, oder alternativ
- im Falle eines zweiten Stellglieds: Einbau und Befestigung des zweiten Stellglieds (2) an einer Stelle, wo es dazu geeignet ist:
∘ die gleichzeitig abgestützten Enden des Anschlags auf seinem Anschlagteil (21) bei Betätigung des ersten Stellglieds (11) aufzunehmen, wobei somit ein erster Betriebsmodus (insbesondere nach einem sogenannten "Simplex-"Modus) ausgeführt wird, der einen ersten Bremsmodus, insbesondere einer Betriebsbremse zur Verfügung stellt, und
∘ die Anschlagenden (122, 132) auseinander zu spreizen und somit die Bremsbacken (12, 13) gegen den Reibungsring anzudrücken, wobei damit durch Reibung ein Brems- bzw. Haltemoment zwischen der Trommel und einer der Bremsbacken (12, 13) übertragbar ist, wobei letztere über ihr bewegliches Ende (121, 131) auf einem, gegenüber der Ankerplatte (10) beweglich angeordneten Abstandelement (14) abgestützt ist, wobei das Abstandselement auf dem beweglichen Ende (121, 131) der anderen Bremsbacke (12, 13) abgestützt ist, wobei diese das Brems- bzw. Haltemoment der Ankerplatte (10) dadurch überträgt, dass sie über ihr Anschlagende (122, 132) auf dem Anschlagteil (21) des zweiten Stellglieds abgestützt ist, wobei sie somit einen zweiten Betriebsmodus (insbesondere nach einem sogenannten "Duo-Servo-Betriebsmodus) ausführt, welcher einen zweiten Bremsmodus, insbesondere einer Park- und/oder Hilfsbremse zur Verfügung stellt.

14. Verfahren nach dem vorangehenden Anspruch, **dadurch gekennzeichnet, dass** die Ankerplatte und das zweite Stellglied zur Herstellung einer Trommelbremsvorrichtung nach einem der Ansprüche 1 bis 10 ausgewählt sind.

15. Verfahren nach dem vorangehenden Anspruch, **dadurch gekennzeichnet, dass** der Schritt des Einbaus und der Befestigung des zweiten Stellglieds (2) die folgenden Vorgänge umfasst:
- das Zusammenstellen eines Zweitgehäuses des zweiten Stellglieds mit einem Hauptgehäuse des zweiten Stellglieds, wobei es eine Hauptauflagefläche (210) mit der Oberfläche der Ankerplatte (10) ergänzender Form trägt, dann
- das Einlegen des Zweitgehäuses (23) des zweiten Stellglieds (2) in eine durchgehende, von der Ankerplatte (10) getragene Öffnung (100) und Positionieren des zweiten Stellglieds mittels Zentrieren bei Berührung zwischen dem Umfang der Öffnung (100) der Ankerplatte und einer Außenfläche einer ersten, über die Hauptauflagefläche (210) des Hauptgehäuses (21) herausragenden Auskragung (211);
- das Befestigen des Hauptgehäuses (21) durch Spannen seiner Hauptauflagefläche (210) gegen die Oberfläche der Ankerplatte (10), sodass ein oder mehrere Befestigungseisen (232) des Zweitgehäuses darin eingespannt werden, wobei sich diese durch die Öffnung (100) hindurch und in einer oder mehreren, zwischen der Ankerplatte und der Hauptauflagefläche (210) erstellten Aussparungen (214) erstrecken.

16. Verfahren nach dem vorangehenden Anspruch, **dadurch gekennzeichnet, dass** es außerdem einen weiteren Schritt des Positionierens und Befestigens eines Getriebemotorelements (5) über ein Getriebemotorgehäuse auf der dem Hauptgehäuse (21) gegenüberliegenden Seite der Ankerplatte in einer Aufnahme für einen Getriebemotor des Zweitgehäuses (23) des zweiten Stellglieds (2) umfasst.

17. Verfahren zum Zusammenstellen eines Fahrzeugs oder einer Fahrzeugunteranordnung, **dadurch gekennzeichnet, dass** es eine Zusammenstellung und/ oder einen Einbau einer Trommelbremsvorrichtung nach einem der Ansprüche 1 bis 11 oder ein Verfahren nach einem der Ansprüche 13 bis 16 umfasst.

## Claims

1. Drum brake device (1) for a motor vehicle, of the type generating a braking torque between a drum and a backing plate (10) in rotational movement relative to each other, by energy absorption under the effect of friction between on the one hand, a braking surface forming a cylinder and borne by an inner surface of said drum, and on the other hand friction linings (123, 133) borne by first and second shoes (12, 13) arranged inside said cylinder and at least partially transmitting the braking torque between shoe and backing plate (10) by at least one element called anchor forming a stop for said shoes with respect to the backing plate (10), said friction being capable of being obtained by moving at least one of said shoes (12, 13) apart outwards under the effect of a least one first actuator (11), thus providing a braking function in a first operating mode.
said device being **characterized in that** it comprises an element called spacer element (14), which is mobile with respect to the plate (10), and which is arranged in order to hold the two ends of said shoes (12, 13) facing each other, called mobile ends (121, 131), apart from each other.
and **in that** it also comprises positioning and fastening means provided to receive either, by fixing firmly to the plate:
- one or more stop elements (19) on which the ends of said shoes (12, 13) can simultaneously press, situated on the opposite side from the mobile ends, called stop ends (122, 132), during actuation of said device in the first operating mode,
- or at least one second actuator (2) fixed to the plate by a main housing (21), said second actuator (2) being arranged in order to be able to move the stop ends (122, 123) apart from each other and thus press said shoes (12, 13) against the braking surface of the drum, thus making it possible by friction to transmit braking or holding torque between said drum and one of the shoes (12, 13), the mobile end (121, 131) of which presses on said spacer element (14), which presses on the mobile end (121, 131) of the other shoe (12, 13), which transmits said braking or holding torque to the backing plate (10) by pressing on said housing (21) by means of its stop end (122, 132), thus providing a braking function in a second operating mode.

2. Vehicle drum brake device (1) according to claim 1, **characterized in that** the backing plate (10) has at least one through-opening (100) forming positioning and fastening means making it possible to receive either the stop element(s) (19) or the main housing (21) of the at least one second actuator (2).

3. Vehicle drum brake device (1) according to the preceding claim, **characterized in that** the main housing (21) comprises a main bearing surface (210), preferably flat, arranged in order to press by complementary contact against the backing plate (10) in at least two areas situated on two opposite sides around the at least one opening (100).

4. Vehicle drum brake device (1) according to the preceding claim, **characterized in that** the main housing (21) of the second actuator (2) comprises at least one or more fastening tabs (218), and in particular two, each equipped with at least one fastening orifice (219) positioned in order to engage with an orifice of the plate in order to receive means for clamping the second actuator (2) against said backing plate (10).

5. Vehicle drum brake device (1) according to claim 3 or 4, **characterized in that** the main housing (21) is positioned in the opening (100) by at least one first extension (211) that extends from the main bearing surface (210).

6. Vehicle drum brake device (1) according to the preceding claim, **characterized in that** the second actuator is enclosed by assembling the main housing (21) with a secondary housing (23) extending through the opening (100) in the plate and which is assembled with the main housing (21) by positioning in contact with at least one second extension (213) extending from a second bearing surface (212) formed by a shoulder originating from the first extension (211) of the main housing; the secondary housing (23) presses against the second bearing surface (212).

7. Vehicle drum brake device (1) according to the preceding claim, **characterized in that** the secondary housing (23) is fastened by gripping between the backing plate (10) and the main housing (21), which has on its circumference one or more cavities (214) passing through the opening in the plate and extending against the surface of the plate on the side of the main housing, to each receive a fastening lug (232) of the secondary housing (23); said fastening lugs (232) of the secondary housing (23) are thus clamped between the main housing (21) and the backing plate (10).

8. Vehicle drum brake device (1) according to the preceding claim, **characterized in that** the secondary housing (23) is fastened to the main housing (21) by a single fastening element, in particular a single screw (231).

9. Vehicle drum brake device (1) according to claim 6, **characterized in that** a geared motor housing, enclosing a geared motor unit (5) of elongated form, driving the second actuator, is fastened to the secondary housing (23), the geared motor unit (5) being placed longitudinally in a direction substantially perpendicular with respect to the axis of rotation A1 of the backing plate (10) and on the opposite side to the main housing (21) with respect to the plate (10).

10. Vehicle drum brake device (1) according to the preceding claim, **characterized in that** the geared motor unit (5) is fastened by one of its ends and is cantilevered with respect to the secondary housing (23).

11. Vehicle drum brake device (1) according to one of the preceding claims, **characterized in that** the main housing (21), the secondary housing (23) and/or the geared motor housing are produced from plastic materials or cast aluminium.

12. Vehicle or vehicle sub-assembly comprising a drum brake device (1) according to any one of the preceding claims.

13. Method for assembling a drum brake mechanism (1) comprising first (12) and second (13) shoes equipped with friction linings (123, 133) facing outwards, which are topped by said drum and are mounted on a plate (10) so as to be able to transmit braking or holding torque to said plate by energy absorption under the effect of friction with a cylindrical braking surface borne by the inside of said drum when ends (121, 131), called mobile ends, of said shoes (12, 13) are moved apart outwards under the effect of a first actuator (11), while their opposite ends, called stop ends, simultaneously press against at least one anchor firmly fixed to the plate,
said method being **characterized in that** it comprises the following operations, in this order or in another order:
- producing or supplying a plate comprising positioning and fastening means making it possible to receive any one of several types of anchor;
- choosing an anchor from a selection comprising a passive abutment plate (19) arranged in order to form said anchor, and a second actuator (2), a stop part (21) of which is arranged in order to form said anchor;
- in the case of an abutment plate: mounting and fastening the abutment plate (19) onto said backing plate (10) in a position in which it is capable of receiving the simultaneous pressure of the stop ends during actuation of the first actuator (11), or alternatively,
- in the case of a second actuator: mounting and fastening the second actuator (2) in a position in which it is capable of:
∘ receiving the simultaneous pressure of the stop ends on its stop part (21) during the actuation of the first actuator (11), thus producing a first operating mode (in particular according to a mode of the type known as "simplex") providing a first braking mode, in particular a service brake mode, and
∘ moving the stop ends (122, 132) apart from each other and thus pressing said shoes (12, 13) against the braking surface of the drum, thus making it possible by friction to transmit braking or holding torque between said drum and one of the shoes (12, 13), the mobile end of which presses on a spacer element (14) that is mobile with respect to the plate (10), which spacer element presses on the mobile end of the other shoe (12, 13), which transmits said braking or holding torque to the backing plate (10) by pressing on said stop part (21) of said second actuator by means of its stop end, thus producing a second operating mode (in particular according to a mode of the type known as "duo-servo") providing a second braking mode, in particular a parking brake and/or emergency brake mode.

14. Method according to the preceding claim, **characterized in that** the plate and the second actuator are chosen in order to produce a drum brake device according to any one of claims 1 to 10.

15. Method according to the preceding claim, **characterized in that** the step of mounting and fastening the second actuator (2) comprises the following operations:
- assembling a secondary housing of the second actuator with a main housing of the second actuator having a main bearing surface (210) with a shape complementary to the surface of the plate (10), then
- inserting the secondary housing (23) of the second actuator (2) into a through-opening (100) in the plate (10) and positioning said second actuator by centring on contact between the circumference of said opening (100) in the plate and an outer surface of a first extension (211) extending from the main bearing surface (210) of the main housing (21).
- fastening the main housing (21) by clamping its main bearing surface (210) against the surface of the plate (10) so as to grip one or more fastening lugs (232) of the secondary housing that extend through the opening (100) and into one or more (214) arranged between the plate and said main surface of abutment (210).

16. Method according to the preceding claim, **characterized in that** it also comprises a subsequent step of positioning and fastening a geared motor unit (5) via a geared motor housing, on the opposite side of the plate to the main housing (21), in a recess for the geared motor in the secondary housing (23) of the second actuator (2).

17. Method for assembling a vehicle or vehicle sub-assembly, **characterized in that** it comprises assembling and/or mounting a drum brake device according to any one of claims 1 to 11, or a method according to any one of claims 13 to 16.
